(19) Europäisches Patentamt

European Patent Office

Office européen des brevets

(11) **EP 1 703 467 A1**

## (12) EUROPEAN PATENT APPLICATION

(43) Date of publication:
**20.09.2006 Bulletin 2006/38**

(51) Int Cl.:
***G06T 7/40*** (2006.01)

(21) Application number: **05251539.2**

(22) Date of filing: **15.03.2005**

(84) Designated Contracting States:
**AT BE BG CH CY CZ DE DK EE ES FI FR GB GR HU IE IS IT LI LT LU MC NL PL PT RO SE SI SK TR**
Designated Extension States:
**AL BA HR LV MK YU**

(72) Inventors:
• **Szajnowski, Wieslaw Jerzy**
  **Guildoford, Surrey GU1 2AR (GB)**
• **Bober, Miroslaw**
  **Guildford, Surrey GU1 2SE (GB)**

(74) Representative: **Burke, Steven David et al**
  **R.G.C. Jenkins & Co.**
  **26 Caxton Street**
  **London SW1H 0RJ (GB)**

(71) Applicants:
• **Mitsubishi Electric Information Technology Centre**
  **Europe B.V.**
  **Guildford GU2 7YD (GB)**
• **MITSUBISHI DENKI KABUSHIKI KAISHA**
  **Chiyoda-ku**
  **Tokyo 100-8310 (JP)**

(54) **Image analysis and representation**

(57)    A one-dimensional representation of an image is obtained using a mapping function defining a closed scanning curve. The function is decomposed into component signals which represent different parts of the bandwidth of the representation using bi-directional filters to achieve zero group delay.

**FIGURE 1**

EP 1 703 467 A1

**Description**

BACKGROUND OF THE INVENTION

Field of the Invention

This invention relates to methods and apparatus for analysis, classification and/or representation of images, and to the processing of signals representing images.

Certain visual characteristics of regions in images, relating to the regularity, coarseness or smoothness of the intensity/colour patterns are commonly referred to as texture properties. Texture properties are important to human perception and recognition of objects. They are also applicable for various tasks in machine vision, for example for automated visual inspection or remote sensing, such as analysing satellite or aerial images obtained from a variety of spectral image sensors.

Texture analysis usually involves extraction of characteristic texture features from images or regions; such features can be later used for image matching, region classification, etc.

Description of the Prior Art

European patent application EP-A-1306805 describes a method of classifying an image, in particular the texture properties of an image. The method involves deriving a feature vector representing the texture by mapping a two dimensional representation of an image into a one dimensional representation using a predetermined mapping function, and then determining the level-crossing statistics of the representation; in particular (i) the rate at which the representation crosses a reference level or multiple reference levels (thresholds), (ii) the rate at which the representation changes when a reference level is crossed and (iii) the average duration for which the representation remains above (or below) a single reference level or multiple reference levels (thresholds).

A novel statistical texture descriptor, employing level-crossing statistics as described in EP-A-1306805 is presented in the paper "Texture Analysis using Level Crossing Statistics", by C. Santamaria, M. Bober and W. Szajnowski, published in Proceedings of the 17th International Conference on Pattern Recognition (ICPR-2004), Cambridge UK, 23-26 August 2004, referred to herein as "ICPR-04". The extraction of the descriptor (i.e. the statistical analysis of the level-crossing features) is performed within a moving window, using four reference levels determined from the minimum, maximum and the mean amplitude values of the signal within the analysis window; these four levels being 25%, 50%, 75% of the maximum value and the also the mean of the signal. In order to describe image properties exhibited at various spatial scales, three different segment lengths are used: 21, 201, and 1001 pixels. While the presented algorithms outperform those of the prior art in both texture-based image retrieval and texture-based image segmentation tasks, it has been found that the performance and properties can be improved even further.

SUMMARY OF THE INVENTION

Aspects of the present invention are set out in the accompanying claims.

According to a further, independent aspect of the invention, a one-dimensional representation of an image is decomposed into component signals which represent different parts of the frequency bands occupied by the representation.

Preferably, the decomposition is achieved by filtering the representation with the use of a low-pass filter, preferably with a substantially constant and known (preferably zero) group delay, and subtracting the filtered signal (i.e. the signal at the output of the filter) from the original signal. This procedure is repeated several times to obtain several band-limited component signals. Accordingly, in the preferred embodiment, a plurality of low-pass filters with different filter characteristics are used to generate a plurality of different versions of the representation extending to different upper frequencies, and each version is subtracted from the version which has the next-higher upper frequency to provide a respective component function.

In a preferred embodiment of the invention, a filter with exactly zero group delay is obtained by applying a recursive filtering backwards and forwards, enabling the use of simple kernels.

In image analysis, it is often required to describe image properties at various spatial resolutions. The ICPR-04 implementation achieves that by using three signal analysis windows of different lengths: 21, 201, and 1001 pixels. The window lengths were determined experimentally (i.e. optimised for the texture analysis applications), which is a very time-consuming process and cannot guarantee optimum performance for all different applications and image data. It is known that a band-pass signal can be adequately represented by a set of its zero crossings under certain conditions (for example, if the ratio of the upper cut-off frequency to the lower cut-off frequency is between two and three, depending on the characteristics of the signal of interest). The aspect of the present invention mentioned above enables multi-resolution representation of an image without the need to use multiple analysis windows. This is achieved by applying the novel signal decomposition into bandwidth-limited component signals and applying the level-statistics analysis to each component signal.

In a preferred embodiment, the number of component band-limited signals (or channels) used for image analysis can be determined adaptively by determination of the signal energy in the lowest frequency band. As a result the number of the multi-resolution "scales" and their spatial extent is defined adaptively, depending on the properties of the image.

In the approach presented in EP-A-1306805 and the ICPR-04 paper, the crossing levels used for texture analysis are selected in an ad-hoc manner. The image intensity or colour components form a non-negative function with asymmetric statistical distribution of amplitude and with often non-stationary behaviour and therefore crossings of any single fixed level or multiple fixed levels do not provide an adequate image signal characterisation. This problem can be overcome, or at least mitigated, by using the aspect of the invention mentioned above. In particular, in a preferred embodiment, a low-pass filter which is used to derive a bandwidth-limited component signal is also used to define an adaptive reference level for another component signal.

A further, independent aspect of the present invention relates to the mapping function which is used to map the image to a one-dimensional function. According to this further aspect, the mapping is achieved using a new type of closed-contour scanning pattern with local region-filling properties

A primary image to be processed is described in a Cartesian co-ordinate system by a non-negative function $f(x,y) \geq 0$, where x and y are two spatial variables. For convenience, it may be assumed that both the spatial variables x and y are bounded as follows: $0 < x < X_{max}$ and $0 < y < y_{max}$. For the purpose of digital processing, the primary image $f(x,y)$ is represented by its samples $f(x_i, y_j)$, determined at prescribed discrete locations $(x_i, y_j: i = 1, 2, ... , I; j = 1, 2, ... , J)$. Usually, those locations form a distinct and regular pattern of points, such as square or hexagonal raster.

Preferably, according to the present aspect of the invention, the resulting image $(x_i, y_j); i = 1, 2, ... , I; j = 1, 2, ... , J$, is mapped into a scanned image, being a function $f(z_k)$ of a *single* discrete spatial variable $z_k$, $k = 1, 2, ... , K$, by employing a scanning curve with the following properties:

the scanning curve $z_k$, $k = 1, 2, ... , K$, passes through each point $(x_i, y_j)$; $1, ... , I; j = 1, ... , J$, only once; hence, $K = I \cdot J$;
the scanning curve $z_k$, $k = 1, 2, ... , K$, is *closed;* therefore, $z_{K+1} = z_1$, $z_{K+2} = z_2$, ... , and repeated scans will result in producing an exact periodic extension of the scanned image function $f(z_k)$; and
preferably, the scanning curve $z_k$, $k = 1, 2, ... , K$, will exhibit, at least some, properties of *plane-filling curves,* such as Hilbert or Peano curves.

The scanning curve can be constructed by suitably combining a primary plane-filling curve with a number of its replicas obtained by translation, rotation and/or mirror-imaging of the primary curve.

One of the benefits resulting from the use of a closed scanning curve is that the resultant signal can be regarded as periodic and therefore, when it is desired for the one-dimensional image representation to be filtered, e.g. by a recursive filter, the initial filter conditions can be determined either by using known methods or simply by using a suitable 'run-in' interval.

The aspects of the invention mentioned above are independently advantageous and usable separately. However, there are significant benefits in combining them, so that the use of a closed scanning curve enhances the operation of filters used to decompose a one-dimensional image to improve analysis thereof.

Although the invention is primarily described in the context of analysing texture represented by the grey levels of an image, the invention could additionally or alternatively be used to analyse other image characteristics, such as colour components, colour component differences and multi-spectral images, and the term "texture" as used herein should be interpreted accordingly.

BRIEF DESCRIPTION OF THE DRAWINGS

Arrangements embodying the invention will now be described by way of example with reference to the accompanying drawings, in which:

Fig. 1 is a block diagram of a texture classifying system according to the invention;

Fig. 2 shows a known Hilbert plane-filling curve and a closed scanning curve constructed therefrom;

Fig. 3 shows a known Peano plane-filling curve and a closed scanning curve constructed therefrom;

Fig. 4 shows another known Peano plane-filling curve and a closed scanning curve constructed therefrom;

Fig. 5 depicts a closed scanning curve intended for a hexagonal raster; and

Fig. 6 is an example of a one-dimensional function representing an image, and a filtered version of the function.

## DETAILED DESCRIPTION OF THE PREFERRED EMBODIMENTS

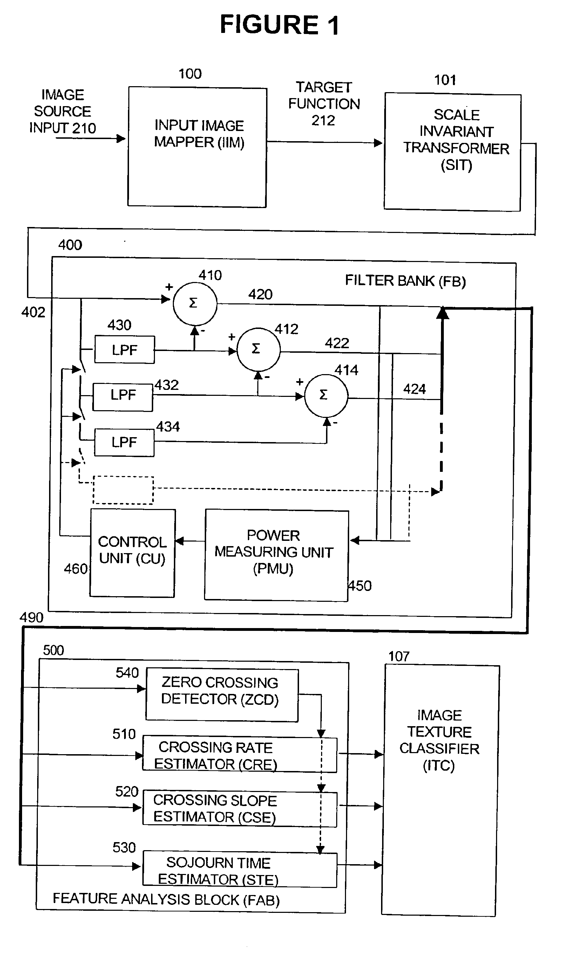

Fig. 1 is a block diagram of a texture classifier according to the present invention.

An input image mapper (IIM) 100 employs a predetermined mapping function to represent grey-level values of a two-dimensional (2-D) input image received at input 210 by a one-dimensional (1-D) function produced at output 212, referred to as the target function, as will be described in more detail below.

A scale-invariant transformer (SIT) 101 uses a suitable logarithmic transformation to convert the target function at output 212 of the IIM 100 into a target-function representation, with values independent of the dynamic range of the 2-D input image. (The dynamic range of the input image may be affected by varying illumination conditions, changes in local sensitivity of an image sensor, etc.)

The output of the SIT 101 is applied to the input of a filter bank (FB) 400 which operates as described below to output in succession a plurality of component functions each representing a respective band-pass component of the target function provided by the SIT 101. It should be pointed out that all filters in the filter bank FB exhibit zero group delay.

The component functions are each separately delivered (as illustrated by bus 490) to a feature analysis block (FAB) 500 which, for each component function, derives a set of values characteristic of that function. The combined sets of values for the component functions form a feature vector representing the original image, and is sent to an image texture classifier (ITC) 107. The image texture classifier (ITC) 107 processes jointly feature data available at its inputs to perform texture classification of the 2-D input image. The procedure used for texture classification may be based on partitioning of the entire feature space into a specified number of regions that represent texture classes of interest.

The system as described above is similar to that described in EP-A-1306805, except for the input image mapper (IIM) 100 and the filter bank (FB) 400, the operations of which will now be described in more detail.

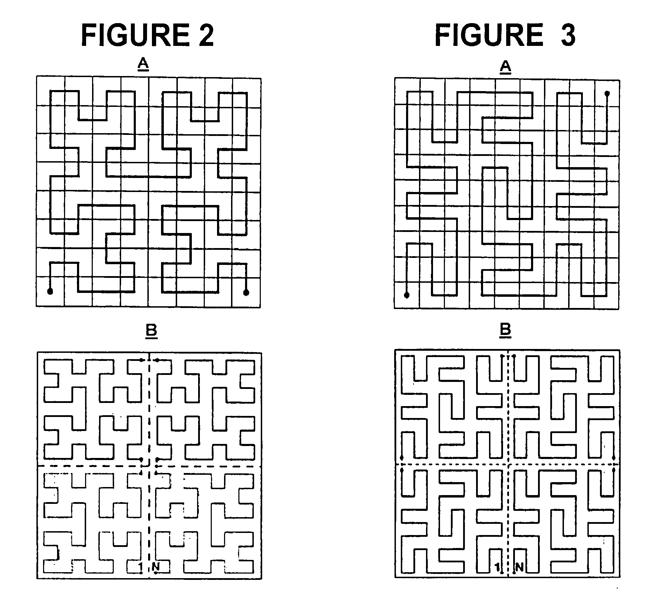

The input image mapper (IIM) 100 transforms the two-dimensional representation of the image received at input 210 into a one-dimensional representation by using a *closed* scanning curve. Fig. 2A depicts schematically a known Hilbert plane-filling curve. The scanning curve used by the IIM 100 is shown in Fig. 2B, and is a composite obtained by suitable geometric transformations of the primary curve of Fig. 2A. Fig. 2B shows four versions of the primary curve, and how they are arranged such that their start and end points are arranged to be adjacent end and start points of adjacent primary curves. The composite curve may have start and end points shown labelled 1 and N in Fig. 2B. By construction, if the primary curve comprises M points, the number K of sampling points in the resulting scanning curve will be equal to K = 4.M. In the example shown, M = 64 and K = 256. It will be noted that the scanning curve of Fig. 2B is a closed curve, in that the start point 1 lies adjacent the end point N.

Fig. 3B shows an alternative closed scanning curve which could be used by the (IIM) 100, and illustrates how in this case the closed curve is formed from a primary curve shown in Fig. 3A, which is a known Peano plane-filling curve of the switch-back type. In this case, M = 81 and K = 324.

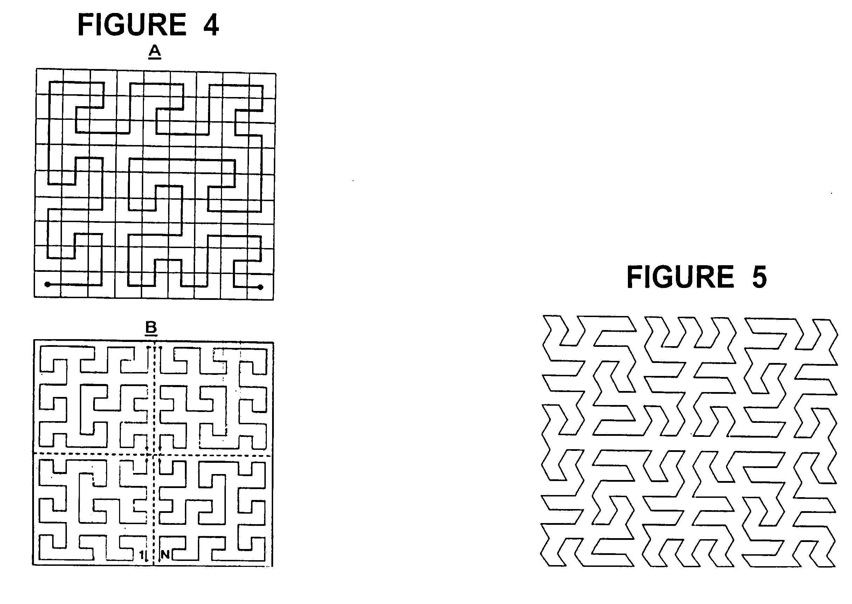

Fig. 4B shows a further possible closed scanning curve which could be used, in this case based on a known Peano plane-filling curve of the meander type, shown in Fig. 4A. Also in this case, M = 81 and K = 324.

The above examples of the construction of closed scanning curves are presented for the purpose of illustration, and are not intended to be exhaustive or to limit the invention to the precise form disclosed. For example, in some applications, it will be advantageous to replace a square raster by a hexagonal one. In such cases, a closed scanning curve can be modified by applying a suitable 'distortion'. Fig. 5 depicts a closed scanning curve intended for a hexagonal raster; the curve has been obtained by 'distorting' the scanning curve shown in Fig. 3. Any two adjacent points can be selected as the start and end points for scanning.

In a preferred embodiment, the scanning curve covers only a part of the image, and the image is scanned so that scanning patterns tessellate (tile) the image in a non-overlapping way. In another preferred embodiment for applications where "dense" image description is required, scanning with overlapping tiles is used. After the scanning, each tile produces a scanned image sequence (one dimensional signal), which is periodic. Each sequence is processed in a similar way to extract image descriptors for the corresponding image region.

The use of a closed scanning curve is beneficial for the filtering operation performed by the filter bank (FB) of Fig. 1, which receives the target function representation from the SIT 101 at an input 402. If the spatial distance:

$$|z_k - z_{k-1}|; \ k = 2, \ldots, N,$$

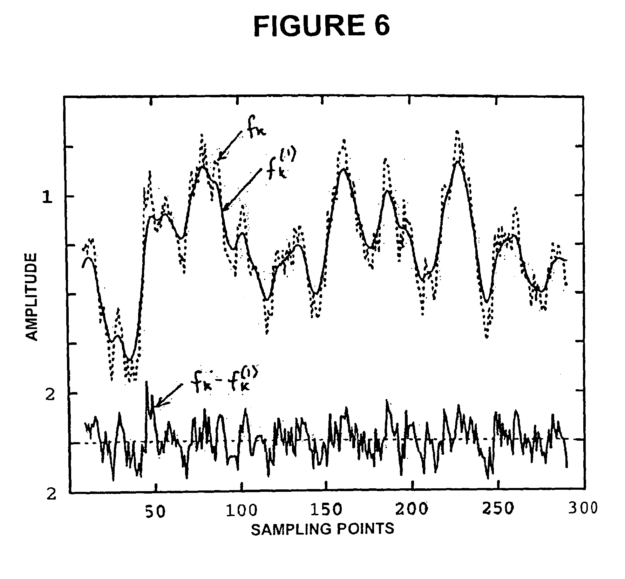

between consecutive sampling points on the scanning curve is constant, the scanned image function $f(z_k)$ can be

represented uniquely by a corresponding sequence $f_k$. An example of such a sequence $f_k$ is shown in Fig. 6, wherein the horizontal axis represents position along the scanning curve and the vertical axis represents amplitude.

The representation is fed to a summer 410 which provides a first component function output 420 containing only the higher frequencies of the target function representation. The target function representation is also fed to a first low-pass filter 430, to remove the higher frequencies, the output of this filter then being fed to a subtracting input of the summer 410, so that the lower frequencies are subtracted from the target function representation, and therefore only the higher frequencies remain in the first component function 420. The low pass filter 410 has a zero group delay.

The output of the low-pass filter 430 is also fed to a second summer, 412, which provides at its output a second component function 422 containing components of lower frequency than those present in the first component function 420. A further low-pass filter 432 receives the target function representation and has a lower cut-off frequency than the filter 430 and an output which is fed to a subtracting input of the summer 412, so that the component function 422 contains band-pass frequencies between the cut-off frequencies of the low-pass filters 430 and 432.

Additional channels containing further low-pass filters of progressively decreasing cut-off frequencies can be provided to obtain additional component functions of progressively lower band-pass frequencies. Thus, for example, the summer 414 can also receive the output from low-pass filter 434 and, at its subtracting input, an output of another filter, to provide a third component signal 424.

In practice, the filter bank 400 is implemented using a processor which receives, stores and processes data in such a way that the component functions 420, 422, etc. are generated at successive times. At least one, and preferably each, component function is separately fed to a power measuring unit (PMU) 450 to measure the power present in each component function. The measurements are passed to a control unit (CU) 460, which controls the number of channels, and thus the number of component functions, which are generated and can also be used in signal characterisation. In this way, the control unit 460 can terminate the filter operation when the most recent component function has a power less than a predetermined threshold. Accordingly, the number of channels and component functions is controlled adaptively.

In EP-A-1306805, the target function representation is split into window regions, within each of which the function is analysed by comparing it with constant-value reference levels. However, better characterisation can be obtained by using an adaptive reference level. A level varying in an adaptive manner is obtained by the low-pass filters 430, 432, etc...

The adaptive reference level is obtained from the scanned image sequence $f_k$ by performing the two following operations in each filter:

1. applying to the sequence $f_k$ the recursive filter

$$v_k = \gamma_1 v_{k-1} + (1-\gamma_1) f_k, \quad 0 < \gamma_1 < 1, \quad k = 1, 2, \ldots, K$$

to generate an auxiliary sequence $v_k$; and

2. applying to the auxiliary sequence $v_k$ the same recursive filter running backward, i. e.

$$f^{(1)}_{K+1-k} = \gamma_1 f^{(1)}_{K+2-k} + (1-\gamma_1) v_{K+1-k}, \quad 0 < \gamma_1 < 1, \quad k = 1, 2, \ldots, K$$

to produce a sequence $f^{(1)}_k$, which represents the required adaptive reference level.

The main purpose of running the same recursive filter forward and backward is to obtain low-pass filtering with exactly zero group delay. An example of a sequence $f^{(1)}_k$ is shown in Fig. 6, and it will be observed that the phase relationship (alignment) with target sequence $f_k$ is maintained.

It should be pointed out that the two above operations can be implemented in any order. Furthermore, their implementation can be structured in such a way that they can be running concurrently.

The parameter $\gamma_1$ is related to the exponential impulse response $\exp(-\gamma_1 \tau)$ of a single-pole analogue low-pass filter. However, the combined operation of the recursive filter running forward and backward is equivalent to convolving a function being processed with a symmetric exponential impulse response of the form $\exp(-\gamma_1 |\tau|)$. Because of the symmetry of the impulse response, the associated group delay will always be equal to zero.

In general, the use of a recursive filter requires determining its initial conditions, such as $v_0$ and $f^{(1)}_{K+1}$. This is facilitated by the use of a closed scanning curve, permitting the filter to use values spanning the boundary between the start and end points of the curve without encountering discontinuity; i.e. the closed scanning curve effectively produces a periodic sequence to be processed. It is thus possible to determine the initial conditions exactly by applying methods known to those skilled in the art. However, a much simpler and practical approach will be to use a suitable 'run-in' interval before the notional start of the period of a sequence being processed.

For improved filtering operation, a different recursive filter can be used as follows

$$v_k = 2\gamma_2 v_{k-1} - \gamma_2^2 v_{k-2} + (1 - \gamma_2)^2 f_k, \quad 0 < \gamma_2 < 1, \quad k = 1, 2, \ldots, K$$

to generate an auxiliary sequence $v_k$. A sequence $f^{(1)}_k$, representing the required adaptive reference level, will then be obtained by running the filter backward through the auxiliary sequence $v_k$.

The combined operation of the improved recursive filter running forward and backward is equivalent to convolving a function being processed with an impulse response of the form $(1+\gamma_2|\tau|)\exp(-\gamma_2|\tau|)$. Also in this case, because of the symmetry of the impulse response, the associated group delay is equal to zero.

The equivalent impulse response of the filter closely resembles a Gaussian response. The equivalent impulse response can approximate a Gaussian response even better, when the sequence being processed is subjected to successive multiple passes (forward and backward) of either the same recursive filters or different recursive filters.

Fig. 6 also shows the result of subtracting the adaptive reference level $f^{(1)}_k$ from the scanned image sequence $f_k$, producing the component function 420. Zero crossings of the component function $\{f_k - f^{(1)}_k\}$ can now be used to represent the scanned image sequence $f_k$ at this initial level of analysis.

All the operations described above are carried out repeatedly, using further low-pass filters to obtain further component functions; each time the preceding adaptive reference level is treated as the original primary scanned image sequence $f_k$. However, each time the new filter parameters are modified as follows: $\gamma_{1new} = (\gamma_{1old})^K$ and $\gamma_{2new} = (\gamma_{2old})^K$, where $1/3 \leq K \leq 1/2$. The entire process is terminated when the last adaptive reference level assumes almost a constant value. In most practical applications, the number of replications of the entire process will be limited to three or four.

The low-pass filters are preferably designed so that the ratios of the cut-off frequencies of the filters of "adjacent" channels is between two and three, because this often provides efficient coverage of the target function spectrum. The number of processor channels employed depends on the spectral properties of the signal $f_k$, which in turn depends on the image properties. For typical images three channels provide a good trade-off between system complexity and performance. If desired, the system could have a fixed number (e.g. three) of channels, instead of an adaptively variable number.

The component functions are delivered to the feature analysis block (FAB) 500. The analysis of the signal performed in the feature analysis block (FAB) 500 will depend on the application. For example for image texture analysis it may include extraction of the zero crossings of the component functions and computing statistical features (descriptors) from the zero crossings and/or the signal at zero crossing points. The illustrated embodiment uses a crossing rate estimator (CRE) 510, a crossing slope estimator (CSE) 520 and a sojourn time estimator (STE) 530 which operate in the same manner as the corresponding units disclosed in EP-A-1306805. In this case, though, the estimators are operating on signal sequences from which adaptive reference levels have been subtracted, so the estimators operate using a zero reference level, as detected by a zero-crossing detector (ZCD) 540. The above examples of the features extracted from the signal are presented for the purpose of illustration only, and are not intended to be exhaustive or to limit the invention.

Many modifications and variations exist and will enable those skilled in the art to utilize the invention in various embodiments suited to the particular task contemplated. For example, although the filtering operation described above was performed to decompose a target representation, the benefits of using a closed scanning curve would also be obtained in circumstances in which the filtering is used for a different purpose, such as noise reduction (e.g. using a non-linear median filter) or edge enhancement (e.g. using a high-pass filter). Also, although the filters mentioned above are recursive, it would be possible alternatively to use Finite Impulse Response filters; again, similar benefits will accrue from the use of closed scanning curves. Although the invention has been described in the context of analysis of two-dimensional images, the techniques can be extended to analysis of multidimensional data, and in particular multidimensional images, by employing suitable space-filling curves. The image may be a conventional visual image, or may be an image in a non-visual part of the electromagnetic spectrum, or indeed may be in a different domain, such as an ultrasound image.

**Claims**

1. A method of processing a signal representing an image, the method comprising:

   (a) using a predetermined mapping function to derive a one-dimensional representation of the image, the one-dimensional representation having a level which successively varies to represent adjacent areas of the image; and
   (b) applying a filter to the representation to derive an output function representing the image;

   **characterised in that** the mapping function has start and end points in adjacent areas, and **in that** the filter is operable to combine values of said one-dimensional representation spanning the boundary between said start and end points.

2. A method of processing a signal representing an image, the method comprising:

   (a) using a predetermined mapping function to derive a one-dimensional representation of the image, the one-dimensional representation having a level which successively varies to represent adjacent areas of the image;
   (b) decomposing the representation by generating component functions each representing a respective frequency region of the representation; and
   (c) analysing said component functions in order to provide a feature vector representative of the image.

3. A method as claimed in claim 2, including the step of generating a component function by using a low-pass filter to obtain a version of the representation and subtracting this from another version of the representation containing higher-frequency components.

4. A method as claimed in claim 3, wherein the filter has a substantially symmetric impulse response, so that the group delay of the filter is substantially equal to zero.

5. A method as claimed in any one of claims 2 to 4, including the step of measuring the power of at least one component function and controlling the number of component functions in response thereto.

6. A method as claimed in any one of claims 2 to 5, wherein a filtering operation is performed to derive said component functions, wherein the mapping function has start and end points in adjacent areas, and wherein the filtering operation is operable to combine values of said representations spanning the boundary between said start and end points.

7. A method as claimed in claim 1 or claim 6, wherein the mapping function defines a composite scanning curve comprising a primary scanning curve and a plurality of replicas thereof, each replica being a translation, rotation and/or mirror-image of the primary curve.

8. A method as claimed in any preceding claim, when used to derive a feature vector representing a two-dimensional image.

9. A method of classifying an image, the method comprising deriving a feature vector using a method as claimed in claim 8, and then determining which one of a number of predetermined regions within a feature space contains that feature vector.

10. Apparatus for analysing an image, the apparatus being arranged to derive a feature vector using a method as claimed in claim 8.

# FIGURE 1

FIGURE 3

FIGURE 2

FIGURE 5

FIGURE 4

# FIGURE 6

## EUROPEAN SEARCH REPORT

**European Patent Office**

**Application Number**

EP 05 25 1539

### DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| D,A | EP 1 306 805 A (MITSUBISHI ELECTRIC INFORMATION TECHNOLOGY CENTRE EUROPE B.V; MITSUBIS) 2 May 2003 (2003-05-02)<br>* the whole document * | 1-10 | G06T7/40 |
| D,A | SANTAMARIA C ET AL: "Texture analysis using level-crossing statistics" PATTERN RECOGNITION, 2004. ICPR 2004. PROCEEDINGS OF THE 17TH INTERNATIONAL CONFERENCE ON CAMBRIDGE, UK AUG. 23-26, 2004, PISCATAWAY, NJ, USA,IEEE, vol. 2, 23 August 2004 (2004-08-23), pages 712-715, XP010724491 ISBN: 0-7695-2128-2<br>* the whole document * | 1-10 | |
| A | RANDEN T ET AL: "Filtering for texture classification: a comparative study" IEEE TRANSACTIONS ON PATTERN ANALYSIS AND MACHINE INTELLIGENCE IEEE COMPUT. SOC USA, vol. 21, no. 4, April 1999 (1999-04), pages 291-310, XP002336483 ISSN: 0162-8828<br>* the whole document * | 1-10 | **TECHNICAL FIELDS SEARCHED** (Int.Cl.7)<br><br>G06T |
| A | LEE J ET AL: "Texture classification method using multiple space filling curves" PATTERN RECOGNITION LETTERS, NORTH-HOLLAND PUBL. AMSTERDAM, NL, vol. 15, no. 12, December 1994 (1994-12), pages 1241-1244, XP004014111 ISSN: 0167-8655<br>* the whole document * | 1-10 | |

-/--

The present search report has been drawn up for all claims

| Place of search | Date of completion of the search | Examiner |
|---|---|---|
| Munich | 18 July 2005 | Herter, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# EP 1 703 467 A1

**European Patent Office**

## EUROPEAN SEARCH REPORT

Application Number

EP 05 25 1539

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | EP 0 757 334 A (IMEC VZW; VRIJE UNIVERSITEIT BRUSSEL) 5 February 1997 (1997-02-05) * abstract; figures 1A,1B,4,5 * * page 1, line 10 - page 5, line 3 * ----- | 1-10 | |
| A | HARALICK R M: "STATISTICAL AND STRUCTURAL APPROACHES TO TEXTURE" PROCEEDINGS OF THE IEEE, IEEE. NEW YORK, US, vol. 67, no. 5, May 1979 (1979-05), pages 786-804, XP001149154 ISSN: 0018-9219 * the whole document * ----- | 1-10 | |
| A | JIANCHANG MAO ET AL: "TEXTURE CLASSIFICATION AND SEGMENTATION USING MULTIRESOLUTION SIMULTANEOUS AUTOREGRESSIVE MODELS" PATTERN RECOGNITION, ELSEVIER, KIDLINGTON, GB, vol. 25, no. 2, 1 February 1992 (1992-02-01), pages 173-188, XP000263523 ISSN: 0031-3203 * the whole document * ----- | 1-10 | TECHNICAL FIELDS SEARCHED (Int.Cl.7) |

The present search report has been drawn up for all claims

| Place of search | Date of completion of the search | Examiner |
|---|---|---|
| Munich | 18 July 2005 | Herter, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 1 703 467 A1**

## ANNEX TO THE EUROPEAN SEARCH REPORT
## ON EUROPEAN PATENT APPLICATION NO.

EP 05 25 1539

This annex lists the patent family members relating to the patent documents cited in the above-mentioned European search report.
The members are as contained in the European Patent Office EDP file on
The European Patent Office is in no way liable for these particulars which are merely given for the purpose of information.

18-07-2005

| Patent document cited in search report | | Publication date | Patent family member(s) | | Publication date |
|---|---|---|---|---|---|
| EP 1306805 | A | 02-05-2003 | EP | 1306805 A1 | 02-05-2003 |
| | | | CN | 1575480 A | 02-02-2005 |
| | | | WO | 03036564 A1 | 01-05-2003 |
| | | | JP | 2005506640 T | 03-03-2005 |
| | | | US | 2005002567 A1 | 06-01-2005 |
| EP 0757334 | A | 05-02-1997 | US | 6058211 A | 02-05-2000 |
| | | | EP | 0757334 A2 | 05-02-1997 |
| | | | JP | 9181922 A | 11-07-1997 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1306805 A

**Non-patent literature cited in the description**

- Texture Analysis using Level Crossing Statistics. **C. SANTAMARIA ; M. BOBER ; W. SZAJNOWSKI.** Proceedings of the 17th International Conference on Pattern Recognition (ICPR-2004. Cambridge, 23 August 2004